# EUROPEAN PATENT APPLICATION

(11) **EP 4 749 963 A1**
(43) Date of publication of application: **27.05.2026**
(21) Application number: 23945438.2
(22) Date of filing: 19.07.2023
(51) Int. Cl.: H04L 5/00, H04W 16/28

(54) **RANDOM ACCESS METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIU, Yang, Dongguan, Guangdong 523860 (CN)
(74) Representative: Novagraaf Technologies
(86) International application number: PCT/CN2023/108039
(87) International publication number: WO 2025/015543

(57) **Abstract**

A random access method and apparatus, and a device and a storage medium, which relate to the technical field of communications. The method comprises: sending or receiving first information, wherein the first information is used for indicating a correspondence between at least one downlink beam reflected by an intelligent reflecting surface and at least one random access resource (410). By means of the method, when an intelligent reflecting surface is introduced into a communication system, by establishing a correspondence between at least one downlink beam reflected by the intelligent reflecting surface and at least one random access resource, a terminal device can determine a random access resource for a random access procedure according to the at least one downlink beam, thereby ensuring the normal execution of the random access procedure and improving the communication stability.

## Description

### TECHNICAL FIELD

Embodiments of the present disclosure relate to the technical field of communications, and in particular, relate to a method and apparatus for random access, and a device and a storage medium thereof.

### RELATED ART

Random access is an indispensable procedure for establishing a wireless link between a terminal device and a network device. Only upon completion of random access may the terminal device and the network device normally perform data interaction operations. As a low-cost reflective device, an intelligent reflecting surface is gradually applied in a communication system due to its scalability and low energy consumption.

Even in a case where the intelligent reflecting surface is introduced into the communication system, the random access procedure still requires further discussion and research.

### SUMMARY

Embodiments of the present disclosure provide a method and apparatus for random access, and a device and a storage medium thereof. The technical solutions are as follows.

According to some embodiments of the present disclosure, a method for random access is provided. The method is performed by a terminal device, and the method includes:
receiving first information, wherein the first information is used to indicate a correspondence between at least one downlink beam reflected by an intelligent reflecting surface and at least one random access resource.

According to some embodiments of the present disclosure, a method for random access is provided. The method is performed by an intelligent reflecting surface, and the method includes:
receiving and/or transmitting first information, wherein the first information is used to indicate a correspondence between at least one downlink beam reflected by the intelligent reflecting surface and at least one random access resource.

According to some embodiments of the present disclosure, a method for random access is provided. The method is performed by a network device, and the method includes:
receiving and/or transmitting first information, wherein the first information is used to indicate a correspondence between at least one downlink beam reflected by an intelligent reflecting surface and at least one random access resource.

According to some embodiments of the present disclosure, an apparatus for random access is provided. The apparatus is arranged in a terminal device, and the apparatus includes:
a receiving module, configured to receive first information, wherein the first information is used to indicate a correspondence between at least one downlink beam reflected by an intelligent reflecting surface and at least one random access resource.

According to some embodiments of the present disclosure, an apparatus for random access is provided. The apparatus is arranged in an intelligent reflecting surface, and the apparatus includes:
a transceiving module, configured to receive and/or transmit first information, wherein the first information is used to indicate a correspondence between at least one downlink beam reflected by the intelligent reflecting surface and at least one random access resource.

According to some embodiments of the present disclosure, an apparatus for random access is provided. The apparatus is arranged in a network device, and the apparatus includes:
a transceiving module, configured to receive and/or transmit first information, wherein the first information is used to indicate a correspondence between at least one downlink beam reflected by an intelligent reflecting surface and at least one random access resource.

According to some embodiments of the present disclosure, a communication device is provided. The communication device includes a processor and a memory; wherein the memory is configured to store at least one computer program therein, wherein the processor, when loading and running the at least one computer program, is caused to perform the methods for random access. Illustratively, the communication device is a terminal device, an intelligent reflecting surface, or a network device.

According to some embodiments of the present disclosure, a computer-readable storage medium is provided. The computer-readable storage medium stores at least one computer program therein, wherein the at least one computer program, when loaded and run by a processor, causes the processor to perform the methods for random access.

According to some embodiments of the present disclosure, a chip is provided. The chip includes programmable logic circuitry and/or at least one program instruction, wherein the chip, when running, is configured to perform the methods for random access.

According to some embodiments of the present disclosure, a computer program product is provided. The computer program product includes at least one computer program stored in a computer-readable storage medium; wherein the at least one computer program, when read from the computer-readable storage medium and loaded and run by a processor, causes the processor to perform the methods for random access.

The technical solutions according to the embodiments of the present disclosure achieve at least the following beneficial effects.

When an intelligent reflecting surface is introduced into a communication system, by establishing a correspondence between at least one downlink beam reflected by the intelligent reflecting surface and at least one random access resource, a terminal device may determine a random access resource for a random access procedure based on the at least one downlink beam, thereby ensuring the normal execution of the random access procedure and improving the communication stability.

### BRIEF DESCRIPTION OF DRAWINGS

FIG. 1 is a schematic diagram of a network architecture according to some embodiments of the present disclosure;
FIG. 2 is a schematic diagram of message forwarding by an intelligent reflecting surface according to some embodiments of the present disclosure;
FIG. 3 is a schematic diagram of a reflected beam according to some embodiments of the present disclosure;
FIG. 4 is a flowchart of a method for random access according to some embodiments of the present disclosure;
FIG. 5 is a schematic diagram of a method for random access according to some embodiments of the present disclosure;
FIG. 6 is a schematic diagram of a method for random access according to some embodiments of the present disclosure;
FIG. 7 is a schematic diagram of a method for random access according to some embodiments of the present disclosure;
FIG. 8 is a block diagram of an apparatus for random access according to some embodiments of the present disclosure;
FIG. 9 is a block diagram of an apparatus for random access according to some embodiments of the present disclosure;
FIG. 10 is a block diagram of an apparatus for random access according to some embodiments of the present disclosure;
FIG. 11 is a structural schematic diagram of a communication device according to some embodiments of the present disclosure.

### DETAILED DESCRIPTION

For clearer descriptions of the objectives, technical solutions, and advantages of the present disclosure, the embodiments of the present disclosure are further described in detail hereinafter with reference to the accompanying drawings.

The network architecture and services scenarios described in the embodiments of the present disclosure are intended to describe the technical solutions according to the embodiments of the present disclosure more clearly, but do not constitute limitations on the technical solutions according to the embodiments of the present disclosure. Those of ordinary skill in the art may understand that, with the evolution of the network architecture and the emergence of new services scenarios, the technical solutions according to the embodiments of the present disclosure are also applicable to similar technical problems.

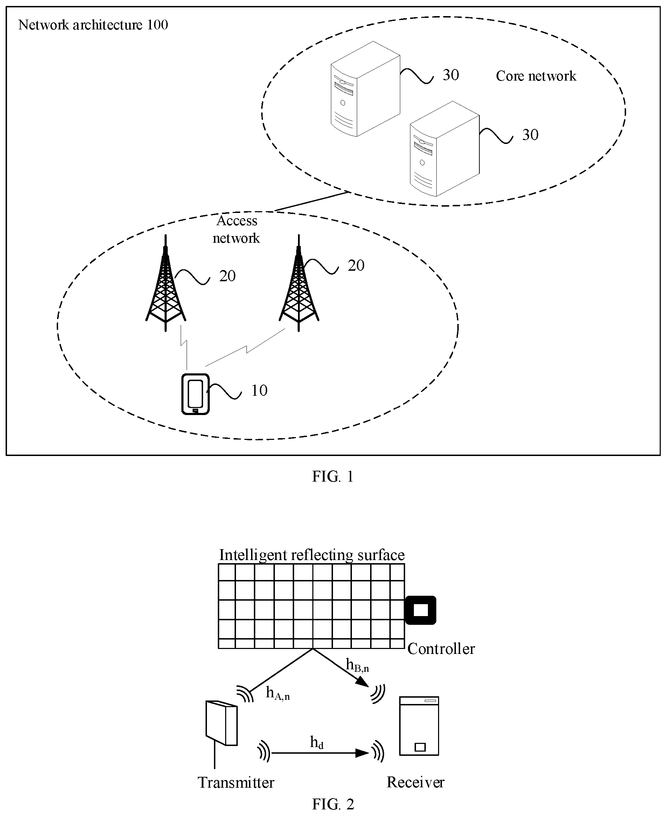

FIG. 1 is a schematic diagram of a network architecture 100 according to some embodiments of the present disclosure. The network architecture 100 may involve a terminal device 10, an access network device 20, and a core network element 30.

The terminal device 10 may be a user equipment (UE), an access terminal, a subscriber unit, a subscriber station, a mobile station, a mobile platform, a remote station, a remote terminal, a mobile device, a wireless communication device, a user agent, or a user apparatus. In some embodiments, the terminal device 10 may also be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5G system, a terminal device in an evolved public land mobile network (PLMN), or the like, which is not limited in the embodiments of the present disclosure. For the convenience of description, the devices mentioned above are collectively referred to as the terminal device. A plurality of terminal devices 10 are usually deployed. At least one terminal device 10 may be distributed in a cell managed by each access network device 20. A terminal device may also be referred to simply as a terminal or UE, and those skilled in the art shall understand its meaning.

The access network device 20 is a device deployed in an access network to provide a wireless communication function for the terminal device 10. The access network device 20 may include various forms of macro base stations, micro base stations, relay stations, access points, and the like. In systems employing different radio access technologies, devices with the function of the access network device may have different names, for example, gNodeB or gNB in a 5G NR system. As the communication technologies evolve, the name "access network device" may change. For the convenience of description, in the embodiments of the present disclosure, the above apparatuses providing the wireless communication function for the terminal device 10 are collectively referred to as the access network device. In some embodiments, a communication relationship may be established between the terminal device 10 and the core network element 30 using the access network device 20. For example, in an LTE system, the access network device 20 may be an evolved universal terrestrial radio access network (EUTRAN) or at least one eNodeB in the EUTRAN. In a 5G NR system, the access network device 20 may be a radio access network (RAN) or at least one gNB in the RAN. In the embodiments of the present disclosure, unless otherwise specified, the term "network device" is the access network device 20, e.g., a base station.

The core network element 30 is an element deployed in a core network. The core network element 30 mainly functions to provide a user connection, user management and service bearing, and to provide an interface to an external network as a bearer network. For example, core network elements in the 5G NR system may include elements such as an access and mobility management function (AMF) entity, a user plane function (UPF) entity, and a session management function (SMF) entity.

In some embodiments, the access network device 20 communicates with the core network element 30 using a specific air interface technology, e.g., an NG interface in the 5G NR system. The access network device 20 communicates with the terminal device 10 using a specific air interface technology, e.g., over a Uu interface.

The "5G NR system" in the embodiments of the present disclosure may also be referred to as a 5G system or an NR system, but those skilled in the art may understand its meaning. The technical solutions according to the embodiments of the present disclosure may be applicable to the LTE system, the 5G NR system, an evolved system subsequent to the 5G NR system (e.g., Beyond 5G (B5G) System, 6th Generation System), a narrowband Internet of things (NB-IoT) system, and other communication systems. This is not limited in the present disclosure.

In the embodiments of the present disclosure, the network device provides services for a cell. The terminal device communicates with the network device over a transmission resource (for example, a frequency-domain resource or a spectrum resource) on a carrier used by the cell. The cell may be a cell corresponding to the network device (for example, the base station). The cell may belong to a macro base station or a base station corresponding to a small cell. The small cell herein may include a metro cell, a micro cell, a pico cell, a femto cell, and the like. These small cells have the characteristics of small coverage and low transmit power, and are applicable to providing high-rate data transmission services.

Prior to description of the technical solutions provided in the present disclosure, some relevant technical knowledge involved in the present disclosure is described. The following related arts, as optional solutions, may be arbitrarily combined with the technical solutions according to the embodiments of the present disclosure, and all fall within the protection scope of the embodiments of the present disclosure. The embodiments of the present disclosure include at least part of the following content.

### 1. Intelligent reflecting surface (IRS)

An IRS is an entirely revolutionary technology. With a large number of low-cost passive reflective elements integrated on a plane, the IRS may intelligently reconfigure the wireless propagation environment, thereby significantly enhancing the performance of wireless communication networks. Specifically, different elements of the IRS may independently reflect incident signals by controlling their amplitude and/or phase, thereby collaboratively achieving refined three-dimensional (3D) passive beamforming for directional signal enhancement or nulling. In one scenario, when the IRS reflects an incident signal, it means that the IRS transparently forwards the incident signal without performing any processing on the incident signal. In another scenario, the reflection of the incident signal by the IRS involves the IRS processing the incident signal first and then forwarding the processed signal. The processing of the incident signal by the IRS may include reading, parsing, writing, and other operations on the signal. Additionally, the IRS may adjust the direction of the reflected signal by controlling the amplitude and/or phase of different elements, so as to achieve the goal of reflecting signals in different directions, which is not limited to specular reflection. The IRS may also forward the incident signal in the form of a beam. Even in a case where the incident signal is not transmitted to the IRS in the form of a beam, the IRS may still forward the incident signal in the form of a beam.

Compared to the conventional transmitter/receiver wireless link adaptation technologies, the IRS actively modifies the wireless channel between a transmitter and a receiver via highly controllable and intelligent signal reflection. This provides a new degree of freedom for further improving the performance of wireless links and paves the way for the realization of an intelligently programmable wireless environment. By appropriately adjusting the 3D passive beamforming, the signal reflected by the IRS may be constructively added to signals from other paths to enhance the desired signal power at the receiver, or destructively cancel out unwanted signals such as co-channel interference. Since the IRS eliminates the use of transmit radio frequency (RF) chains and only operates over short distances, the IRS may be densely deployed with scalable costs and low energy consumption, without the need for complex interference management between passive IRSs.

As illustrated in FIG. 2, in the absence of the IRS, a beam h_{d} transmitted by the transmitter is directly received by the receiver; in the presence of the IRS, a beam h_{A,n} transmitted by the transmitter is reflected by the IRS into a beam h_{B,n}, and the receiver receives the beam h_{B,n} reflected by the IRS. In some cases, for example, in a building scenario where the transmitter is installed on the roof and the receiver is located on a floor of the building, without the IRS, in a case where the transmitter transmits signals directly to the receiver, the signals are easily affected by obstacles such as walls, resulting in poor signal quality received by the receiver. However, in a case where the IRS is installed on the wall of an adjacent building to forward the signals transmitted by the transmitter, the number of obstacles in the signal propagation path may be effectively reduced, ensuring high-quality signals received by the receiver. The IRS eliminates the need of transmit RF chains. Since the IRS only operates over short distances, dense deployment may be adopted to improve the signal coverage of the transmitter. In a case where the distance between the transmitter and the receiver is long, the beam transmitted by the transmitter may be forwarded via a plurality of IRSs, and the transmitter does not need to perform complex interference management on the IRSs. In a case where the distance between the transmitter and the receiver is long, the transmitter needs to manage the beams transmitted via the transmit RF chains, for example, determining the transmission power of the beams, to ensure the signal quality of the beams received by the receiver.

### 2. Random access under beamforming

In the context of applying beamforming, synchronization signal and physical broadcast channel (PBCH) blocks (SSBs) oriented in different directions are mapped to different random access resources (such as random access preambles and time-frequency domain resources for random access). Upon receiving Msg1 from the terminal device over specific random access resources, the base station may determine which SSB has the strongest signal as measured by the terminal device, and then continue to transmit Msg2 and Msg4 via the beam bound to the SSB. This configuration facilitates the execution of random access by the terminal device when beamforming is applied.

In related technologies, when beamforming is used, the access network device (e.g., a base station) transmits the SSBs in different directions via at least one beam, where the SSBs in different directions are mapped to different random access resources. The terminal device performs downlink signal measurements on the SSBs from the access network device to determine the random access resources for the random access procedure. The base station may identify the SSBs used by the terminal device based on the binding relationship between the SSBs in different directions and random access resources.

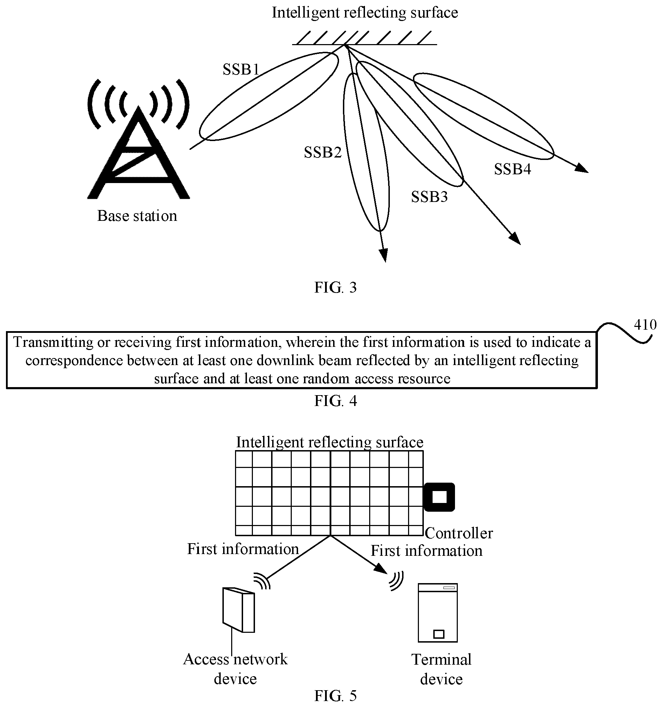

In the embodiments of the present disclosure, the IRS is used to reflect the SSBs from the access network device (e.g., a base station) into different directions, where the SSBs in different directions are respectively bound to different random access resources. Taking the four-step random access as an example, as illustrated in FIG. 3, the IRS may reflect the synchronization signal SSB1 received from the base station into different directions (e.g., SSB2, SSB3, SSB4). The terminal device performs downlink signal measurements on the beams reflected by the IRS (where different downlink beams for transmitting SSB2, SSB3, and SSB4) to determine the random access resources for transmitting Msg1. In a case where the IRS fails to know which SSB-bound random access resource the terminal device selects to transmit Msg1, upon receiving Msg2 and Msg4 from the access network device, the IRS may fail to determine which downlink beam to use for transmitting to the terminal device.

It should be noted that the technical solutions according to the embodiments of the present disclosure may be applicable to both a four-step random access procedure and a two-step random access procedure.

FIG. 4 is a flowchart of a method for random access according to some embodiments of the present disclosure. The method may be applicable to the network architecture illustrated in FIG. 1. The method includes S410.

In S410, first information is transmitted or received. The first information is used to indicate a correspondence between at least one downlink beam reflected by an IRS and at least one random access resource.

In some embodiments, S410 may be performed by at least one of: an access network device, a core network element, the IRS, or a terminal device, which is not limited in the present disclosure.

Illustratively, the access network device transmits the first information. For example, a base station transmits the first information. Correspondingly, the terminal device receives the first information from the access network device, or the terminal device receives the first information from the IRS, or the IRS receives the first information from the access network device.

Illustratively, the core network element transmits the first information. For example, the AMF transmits the first information. Correspondingly, the access network device receives the first information from the core network element, or the IRS receives the first information from the core network element, or the IRS receives the first information forwarded by the access network device.

Illustratively, the IRS forwards the first information. Correspondingly, the access network device receives the first information from the IRS, and/or the terminal device receives the first information from the IRS.

The first information is used to indicate the correspondence between at least one downlink beam reflected by the IRS and at least one random access resource. In some embodiments, the at least one downlink beam reflected by the IRS is respectively bound to the at least one random access resource. The correspondence between the at least one downlink beam reflected by the IRS and the at least one random access resource refers to the binding relationship between the at least one downlink beam reflected by the IRS and the at least one random access resource. Illustratively, downlink beam 1 of the IRS is bound to random access resource 1, and downlink beam 2 of the IRS is bound to random access resource 2.

In some embodiments, random access resources include random access preambles and time-frequency domain resources for random access.

In some embodiments, the downlink beams of the IRS may be downlink beams for transmitting any downlink information. For example, the downlink beams of the IRS may be used to transmit SSBs, downlink control information (DCI), and the like. For example, different beams of the at least one downlink beam correspond to different SSBs.

In some embodiments, the correspondence is determined by the network device.

In some embodiments, the correspondence is indicated by the network device to the IRS and/or the terminal device.

In some embodiments, the correspondence is determined by the network device and indicated to the IRS and/or the terminal device.

In some embodiments, the network device transmits the first information to the IRS and/or the terminal device to indicate the correspondence.

In some embodiments, the network device may also transmit other information to the IRS and/or the terminal device to indicate the correspondence. Illustratively, the network device may indicate the correspondence in a system broadcast message transmitted to the terminal device. Illustratively, the IRS may acquire the correspondence from the system broadcast message transmitted by the network device.

In some embodiments, the network device is the access network device or the core network element.

Taking the network device being the access network device as an example, the correspondence is determined by the access network device. The access network device indicates the correspondence to the IRS and/or the terminal device. In one example, the access network device directly indicates the correspondence to the IRS and/or the terminal device. For example, the access network device directly transmits the first information to the IRS and/or the terminal device. In another example, the access network device indicates the correspondence to the terminal device via forwarding by the IRS. For example, the access network device transmits the first information to the terminal device via forwarding by the IRS.

Taking the network device being the core network element as an example, the correspondence is determined by the core network element, for example, the AMF. The core network element indicates the correspondence to at least one of: the IRS, the terminal device, or the access network device.

In some embodiments, the core network element may directly indicate the correspondence to at least one of: the IRS, the terminal device, or the access network device, or may indirectly indicate the correspondence. Direct indication means that the core network element directly indicates the correspondence to a receiver, while indirect indication means that the core network element indicates the correspondence to the receiver via forwarding by an intermediate device. The receiver includes at least one of: the IRS, the terminal device, or the access network device. The intermediate device may also include at least one of: the IRS, the terminal device, or the access network device. For example, an indirect indication may be that the AMF indicates the correspondence to the access network device, and then the access network device indicates the correspondence to the IRS and/or the terminal device. For example, a direct indication may be that the AMF directly indicates the correspondence to the IRS, the terminal device, and the access network device.

In some embodiments, the correspondence is determined by the IRS.

In some embodiments, the correspondence is indicated by the IRS to the terminal device and/or the network device.

In some embodiments, the correspondence is determined by the IRS and indicated to the terminal device and/or the network device.

Illustratively, upon determining the correspondence, the IRS indicates the correspondence to the terminal device and/or the network device.

In some embodiments, the IRS forwards the first information to the network device and/or the terminal device to indicate the correspondence. In one example, the IRS directly forwards the first information to the access network device and/or the terminal device. In another example, the IRS forwards the first information to the core network element via forwarding by the access network device.

In some embodiments, the IRS forwards the first information to the network device to indicate the correspondence. Upon receiving the first information, the network device forwards the first information to the terminal device to indicate the correspondence. In some embodiments, the IRS forwards the first information to the network device to indicate the correspondence, and upon receiving the first information, the network device transmits a system broadcast message to the terminal device to indicate the correspondence.

In some embodiments, upon S410, the method further includes at least one of S420 to S450 (not illustrated in FIG. 4).

In S420, the IRS receives the first message from the terminal device over the first random access resource.

In some embodiments, the terminal device performs downlink signal measurement on at least one downlink beam reflected by the IRS to acquire a measurement result corresponding to each of the at least one downlink beam, and determines the first random access resource based on the measurement result corresponding to each of the at least one downlink beam.

In some embodiments, the terminal device determines the first downlink beam from the at least one downlink beam based on the measurement result corresponding to each of the at least one downlink beam, and identifies the random access resource corresponding to the first downlink beam as the first random access resource based on the correspondence.

In some embodiments, the terminal device determines the downlink beam with an optimal signal quality among the at least one downlink beam as the first downlink beam based on the measurement results corresponding to each of the at least one downlink beam.

The present disclosure does not limit the method for the terminal device to perform downlink signal measurement, nor the indicators used by the terminal device to measure the signal quality of the at least one downlink beam. For example, the terminal device may use indicators such as a signal-to-noise ratio (SNR), a signal-to-interference-plus-noise ratio (SINR), a reference signal receiving quality (RSRQ), a signal energy, a reference signal received power (RSRP), and a received signal strength indicator (RSSI) to measure the signal quality of the at least one downlink beam.

In some embodiments, a first message is used to request the network device to perform random access. For example, the first message may be Msg1 in a four-step random access procedure, or MsgA in a two-step random access procedure.

In some embodiments, the first message includes the random access preamble.

In some embodiments, in addition to the random access preamble, the first message further includes a physical uplink shared channel (PUSCH).

In S430, the IRS forwards the first message to the access network device.

In S440, the IRS receives a second message from the access network device.

In some embodiments, the second message is used to respond to the first message. For example, when the first message is Msg1 in the four-step random access procedure, the second message may be Msg2 in the four-step random access procedure.

In some embodiments, the second message is further used to indicate the random access result to the terminal device. For example, when the first message is MsgA in the two-step random access procedure, the second message may be MsgB in the two-step random access procedure.

In S450, the IRS forwards the second message to the terminal device via the downlink beam corresponding to the first random access resource.

In some embodiments, the downlink beam used by the IRS in forwarding the second message is determined by the IRS, or is indicated to the IRS by the network device.

In some embodiments, the IRS determines the downlink beam for forwardingthe second message based on the first random access resource.

In some embodiments, the IRS determines the downlink beam for forwardingthe second message based on the position of the random access resource over which the first message is received (i.e., the position of the first random access resource).

In some embodiments, the IRS determines the downlink beam for forwarding the second message based on the random access preamble contained in the received first message.

In some embodiments, the network device determines the downlink beam for forwarding the second message based on the random access preamble in the first message, and indicates the determined downlink beam to the IRS.

In the technical solutions according to the embodiments of the present disclosure, in a case where the IRS is introduced into a communication system, by establishing the correspondence between at least one downlink beam reflected by the IRS and at least one random access resource, the terminal device may determine the random access resource for the random access procedure based on the at least one downlink beam, thereby ensuring the normal execution of the random access procedure and improving the communication stability.

Next, the technical solutions according to the embodiments of the present disclosure are hereinafter described in detail by taking the execution subject of S410 being the network device, the IRS, and the terminal device as examples respectively.

### I. The network device transmits the first information

### 1. The network device is the access network device

### 1.1. The correspondence is determined by the network device

### 1.1.1. The correspondence is determined by the access network device

In some embodiments, the number of the at least one downlink beam reflected by the IRS is configured by the network device, is configured by the IRS, or is preconfigured. The pre-configuration may be performed by the IRS based on its own implementation, pre-configured by the network device, or predefined in a protocol, which is not limited in the present disclosure.

In one example, the number of at least one downlink beam reflected by the IRS is configured by the network device.

For example, the number of the at least one downlink beam reflected by the IRS is configured by an access network device. That is, in addition to configuring the correspondence, the access network device also configures the number of the at least one downlink beam. In this case, upon completion of the configuration of the correspondence, the access network device transmits the first information to the IRS and/or the terminal device to indicate the correspondence.

In some embodiments, the access network device transmits the first information to the IRS and the terminal device respectively. For example, the access network device directly transmits the first information to the IRS. Another example is that the access network device directly transmits the first information to the terminal device. A further example is that the access network device transmits the first information to the terminal device via forwarding by the IRS.

In some embodiments, the access network device transmits the first information to the terminal device via forwarding by the IRS, and the IRS acquires the correspondence between the at least one downlink beam reflected by itself and the at least one random access resource based on the first information.

In some embodiments, the access network device transmits the first information to the terminal device in a broadcast manner.

For example, the number of the at least one downlink beam reflected by the IRS is configured by the core network element. In this case, before the access network device configures the correspondence, the core network element indicates the number of the at least one downlink beam reflected by the IRS to the access network device.

In some embodiments, the network device indicates the number of the at least one downlink beam to the IRS. The information used to indicate the number of the at least one downlink beam may be included in the first information transmitted by the network device to the IRS, or may be transmitted to the IRS separately. The phrase "transmitted separately" means that the information is not included in the first information.

In some embodiments, the network device does not indicate the number of the at least one downlink beam to the IRS, and the IRS determines the number of the at least one downlink beam based on the correspondence indicated in the first information.

In another example, the number of the at least one downlink beam reflected by the IRS is configured by the IRS.

In this case, before the access network device configures the correspondence, the IRS indicates the number of the at least one downlink beam to the access network device. Upon completion of the configuration of the correspondence, the access network device transmits the first information to the IRS and/or the terminal device, and indicates the correspondence to the IRS and/or the terminal device via the first information.

Illustratively, FIG. 5 illustrates a schematic diagram of a method for random access provided by an embodiment of the present disclosure, in which the correspondence is determined by the access network device. The method may include at least one of S1 to S3.

In S1, the access network device determines the correspondence between the at least one downlink beam reflected by the IRS and the at least one random access resource.

In S2, the access network device transmits the first information to the IRS, where the first information is used to indicate the correspondence between the at least one downlink beam reflected by the IRS and the at least one random access resource.

In S3, the IRS receives the first information from the access network device and forwards the first information to the terminal device.

### 1.1.2. The correspondence is determined by the core network element

Taking a 5G communication system as an example, the core network element may be the AMF or another core network element. In other communication systems, the core network element may have different names.

In some embodiments, the core network element directly transmits the first information to at least one of: the access network device, the IRS, or the terminal device. In this case, the access network device, the IRS, and the terminal device receive the first information from the core network element.

In some embodiments, the core network element transmits the first information to the terminal device via forwarding by the IRS.

In some embodiments, the core network element transmits the first information to the access network device. Upon receiving the first information from the core network element, the access network device then transmits the first information to the IRS and/or the terminal device.

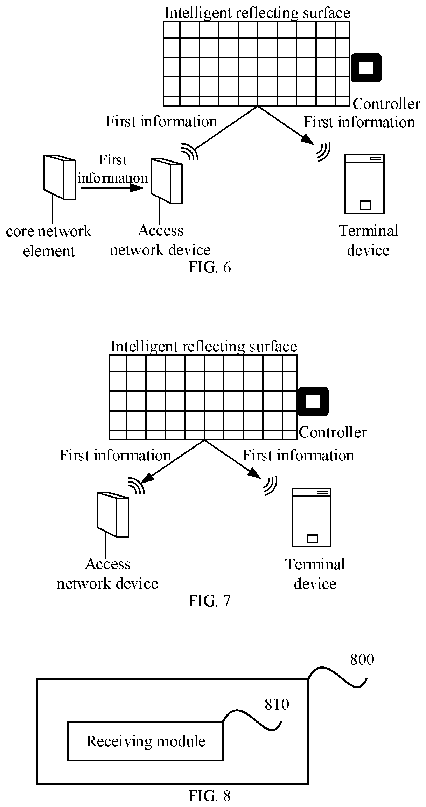

Illustratively, FIG. 6 illustrates a schematic diagram of a method for random access provided by an embodiment of the present disclosure. The correspondence is determined by the core network element. The method may include at least one of the following S1 to S4.

In S1, the core network element determines the correspondence between the at least one downlink beam reflected by the IRS and the at least one random access resource.

In S2, the core network element transmits the first information to the access network device, where the first information is used to indicate the correspondence between the at least one downlink beam reflected by the IRS and the at least one random access resource.

In S3, the access network device transmits the first information to the IRS.

In S4, the IRS receives the first information from the access network device and forwards the first information to the terminal device.

### 1.2. The correspondence is determined by the IRS

In some embodiments, upon determining the correspondence, the IRS forwards the first information to the access network device. Correspondingly, the access network device receives the first information from the IRS.

In some embodiments, upon determining the correspondence, the IRS forwards the first information to the terminal device. Correspondingly, the terminal device receives the first information from the IRS.

In some embodiments, upon receiving the first information from the IRS, the access network device indicates the correspondence between the at least one downlink beam reflected by the IRS and the at least one random access resource to the terminal device in the broadcast manner.

Illustratively, FIG. 7 illustrates a schematic diagram of a method for random access provided by an embodiment of the present disclosure, in which the correspondence is determined by the IRS. The method may include at least one of the following S1 to S3.

In S1, the IRS determines the correspondence between the at least one downlink beam reflected by itself and the at least one random access resource.

In S2, the IRS forwards the first information to the access network device, where the first information is used to indicate the correspondence between the at least one downlink beam reflected by the IRS and the at least one random access resource.

In S3, the IRS forwards the first information to the terminal device.

### II. The IRS forwards the first information

### 2.1. The correspondence is determined by the network device

In some embodiments, upon determining the correspondence, the network device indicates the correspondence to the IRS. The IRS forwards the first information to the terminal device based on the correspondence. Illustratively, reference may be made to the method for random access illustrated in FIG. 5 and FIG. 6.

### 2.2. The correspondence is determined by the IRS

In some embodiments, upon determining the correspondence, the IRS forwards the first information to the network device and/or the terminal device respectively. Illustratively, reference may be made to the method for random access illustrated in FIG. 7.

It should be noted that the above embodiments may be combined with each other to form new embodiments, which is not described herein any further.

By the method, in both scenarios where the correspondence is determined by the network device and by the IRS, in a case where the terminal device determines the random access resource for the random access procedure, the IRS may also acquire the downlink beam for the random access procedure accordingly, thereby ensuring the normal execution of the random access procedure and improving communication stability.

In some embodiments, the terminal device performs downlink signal measurement on at least one downlink beam reflected by the IRS to acquire measurement results corresponding to each of the at least one downlink beam. The terminal device determines the first downlink beam based on the measurement results corresponding to each of the at least one downlink beam and identifies the random access resource corresponding to the first downlink beam as the first random access resource based on the correspondence.

In some embodiments, the correspondence is represented by a one-to-one correspondence between the identification information of downlink beams and the identification information of random access resources. Different downlink beams have different identification information, and the identification information of downlink beams is used to distinguish between different downlink beams. Different random access resources have different identification information, and the identification information of random access resources is used to distinguish between different random access resources.

In some embodiments, the downlink beam is used to transmit an SSB, and the identification information of the downlink beam may be represented by the identification information of the SSB. For example, the identification information of the downlink beam may be represented by an SSB identifier (ID) of the SSB transmitted by the downlink beam.

In some embodiments, the identification information of the random access resource may be a unique identifier assigned to the random access resource (e.g., a unique code). The identification information of the random access resource may also be the random access preamble of the random access resource, or the time-frequency domain position of the random access resource, which is not limited in the present disclosure. Illustratively, in a case where different random access resources have different random access preambles, the random access preamble of the random access resource may be used as the identification information of the random access resource. Illustratively, in a case where different random access resources have different time-frequency domain positions, the time-frequency domain position of the random access resource may be used as the identification information of the random access resource. Illustratively, unique codes may be assigned to different random access resources respectively, serving as the identification information of the different random access resources.

In some embodiments, in addition to downlink information, different downlink beams are also used to transmit their own identification information. For example, the downlink beam is used to transmit the SSB, and the downlink beam is also used to transmit the SSB ID of the SSB transmitted by the downlink beam.

In some embodiments, the terminal device determines the first random access resource based on the identification information of the first downlink beam.

In some embodiments, the terminal device searches for and acquires the first random access resource in the correspondence indicated by the first information based on the identification information of the first downlink beam. For example, in a case where the identification information of the first downlink beam is the SSB ID of the first SSB transmitted by the first downlink beam, the terminal device may find the identification information of the first random access resource corresponding to the SSB ID of the first SSB in the correspondence, and then determine the first random access resource.

In some embodiments, in addition to downlink information, different downlink beams are also used to transmit the identification information of the random access resources bound to themselves.

In some embodiments, the terminal device determines the first random access resource based on the identification information of the random access resource carried by the first downlink beam, and uses the first random access resource to transmit the first message to the access network device.

In some embodiments, in a case where different downlink beams carry the time-frequency domain configuration of the random access resources bound thereto and the random access preamble corresponding to the random access resources, the terminal device does not need to acquire the correspondence. In this case, the access network device and/or the IRS may determine the downlink beam for the random access procedure based on the random access preamble carried in the first message and the correspondence.

By the method, the terminal device may determine the random access resource for the random access procedure based on different downlink beams.

Hereinafter, the technical solutions according to the embodiments of the present disclosure are described in detail by taking the two-step random access procedure and the four-step random access procedure as examples.

### I. Two-step random access procedure

Upon determining the first random access resource, the terminal device starts the random access procedure. The two-step random access procedure may include at least one of S1 to S2.

In S1, the terminal device transmits the first message to the access network device over the first random access resource.

In some embodiments, the first message includes the random access preamble.

In some embodiments, the first message is used to request the access network device to start the random access procedure and transmit the uplink information required for the random access procedure to the access network device. Illustratively, the first message may be MsgA in the two-step random access procedure. MsgA is used to indicate the random access preamble and scheduled PUSCH transmission to the access network device.

In some embodiments, the first message is forwarded to the access network device via the IRS. Illustratively, the IRS receives the first message from the terminal device over the first random access resource and forwards the first message to the access network device.

In some embodiments, the access network device and/or the IRS determines the downlink beam corresponding to the first random access resource based on the random access preamble carried in the first message and the correspondence.

In some embodiments, the downlink beam used by the IRS in forwarding the second message (i.e., the downlink beam corresponding to the first random access resource) is determined by the IRS, or is indicated to the IRS by the network device.

In one example, upon determining the downlink beam corresponding to the first random access resource based on the random access preamble carried in the first message and the correspondence, the access network device indicates the downlink beam corresponding to the first random access resource to the IRS.

In another example, the IRS determines the downlink beam corresponding to the first random access resource based on the random access preamble carried in the first message and the correspondence.

In some embodiments, the first message may carry the identification information of the downlink beam corresponding to the first random access resource. In this case, the access network device and/or the IRS may determine the downlink beam used by the IRS in forwarding the second message based on the identification information of the downlink beam carried in the first message. In a case wherethe IRS does not have the capability to read the first message, the access network device determines the downlink beam used by the IRS in forwarding the second message and then indicates the downlink beam used by the IRS in forwarding the second message to the IRS. In a case wherethe IRS has the capability to read the first message, the IRS directly determines the downlink beam for forwarding the second message.

In S2, the access network device transmits the second message to the terminal device.

In some embodiments, the second message is used to respond to the first message and indicate the random access result to the terminal device. Illustratively, the second message may be MsgB in the two-step random access procedure. MsgB is used to indicate the random access response and the random access result to the terminal device.

In some embodiments, the second message is forwarded to the terminal device via the IRS. Illustratively, the IRS receives the second message from the access network device, and transmits the second message to the terminal device via the downlink beam corresponding to the first random access resource.

In some embodiments, the access network device transmits the second message to the terminal device in a unicast manner.

By the method, the IRS may acquire the downlink beam used for the random access procedure, thereby ensuring the normal execution of the random access procedure and improving the stability of communication.

### II. Four-step random access procedure

Upon determining the first random access resource, the terminal device starts the random access procedure. The four-step random access procedure may include at least one of S1 to S4.

In S1, the terminal device transmits the first message to the access network device over the first random access resource.

In some embodiments, the first message is used to request the access network device to start the random access procedure. Illustratively, the first message may be Msg1 in the four-step random access procedure. For example, the first message is used to transmit the random access preamble to the access network device.

In some embodiments, the first message is forwarded to the access network device via the IRS. Illustratively, the IRS receives the first message from the terminal device over the first random access resource and forwards the first message to the access network device.

In some embodiments, the access network device (and/or the IRS) determines the downlink beam corresponding to the first random access resource based on the random access preamble carried in the first message and the correspondence.

In some embodiments, the downlink beam used by the IRS in forwarding the second message (i.e., the downlink beam corresponding to the first random access resource) is determined by the IRS, or is indicated to the IRS by the network device.

In one example, upon determining the downlink beam corresponding to the first random access resource based on the random access preamble carried in the first message and the correspondence, the access network device indicates the downlink beam corresponding to the first random access resource to the IRS.

In another example, the IRS determines the downlink beam corresponding to the first random access resource based on the random access preamble carried in the first message and the correspondence.

In some embodiments, the first message may carry the identification information of the downlink beam corresponding to the first random access resource. In this case, the access network device and/or the IRS may determine the downlink beam used by the IRS in forwarding the second message based on the identification information of the downlink beam carried in the first message. In a case where the IRS does not have the capability to read the first message, the access network device first determines the downlink beam used by the IRS in forwarding the second message and then indicates the downlink beam used by the IRS in forwarding the second message to the IRS. In a case where the IRS has the capability to read the first message, the IRS directly determines the downlink beam for forwarding the second message.

In S2, the access network device transmits the second message to the terminal device.

In some embodiments, the second message is used to respond to the first message. Illustratively, the second message may be Msg2 in the four-step random access procedure. Msg2 is used to respond to the first message. For example, the second message may be the random access response.

In some embodiments, the second message is forwarded to the terminal device via the IRS. Illustratively, the IRS receives the second message from the access network device and transmits the second message to the terminal device via the downlink beam corresponding to the first random access resource.

In some embodiments, the access network device transmits the second message to the terminal device in the unicast manner.

In S3, the terminal device transmits a third message to the access network device.

In some embodiments, the third message is used to transmit the uplink information required for the random access procedure to the access network device. Illustratively, the third message may be Msg3 in the four-step random access procedure. Msg3 is used to transmit a scheduled PUSCH transmission to the access network device. Illustratively, the third message may be described a scheduled transmission.

For the transmission of the third message, reference may be made to the transmission of the first message, which is not described herein any further.

In S4, the access network device transmits a fourth message to the terminal device.

In some embodiments, the fourth message is used to indicate the random access result to the terminal device. Illustratively, the fourth message may be Msg4 in the four-step random access procedure. Msg4 is used to indicate the contention result of the random access procedure. Illustratively, the fourth message may be a contention resolution.

For the transmission of the fourth message, reference may be made to the transmission of the second message, which is not described herein any further.

By the method, the IRS may acquire the downlink beam used for the random access procedure, thereby ensuring the normal execution of the random access procedure and improving the stability of communication.

Some embodiments of the present disclosure further provide a method for random access. The method is performed by a terminal device, and includes at least one of S1 to S3.

In S1, the terminal device receives first information, wherein the first information is used to indicate a correspondence between at least one downlink beam reflected by the IRS and at least one random access resource.

In some embodiments, the correspondence is determined by a network device.

In some embodiments, the correspondence is indicated by the network device to the IRS and/or the terminal device.

In some embodiments, the network device transmits the first information to the IRS and/or the terminal device to indicate the correspondence.

Correspondingly, the terminal device receives the first information from the network device.

In some embodiments, the network device is an access network device or a core network element. In a case where the network device is the access network device, the terminal device receives the first information from the access network device; or in a case where the network device is the core network element, the terminal device receives the first information from the core network element.

In some embodiments, the correspondence is determined by the IRS.

In some embodiments, the correspondence is indicated by the IRS to the terminal device and/or the network device.

In some embodiments, the IRS forwards the first information to the network device and/or the terminal device to indicate the correspondence.

Correspondingly, the terminal device receives the first information from the IRS.

In some embodiments, different beams of the at least one downlink beam correspond to different SSBs.

In some embodiments, the number of the at least one downlink beam is configured by the network device, is configured by the IRS, or is preconfigured.

In S2, the terminal device transmits a first message over a first random access resource, wherein the first message is forwarded to the access network device by the IRS.

Correspondingly, the IRS forwards the first message from the terminal device to the access network device. The access network device receives the first message forwarded by the IRS.

In S3, the terminal device receives a second message from the access network device, wherein the second message is forwarded to the terminal device by the IRS via a downlink beam corresponding to the first random access resource.

Correspondingly, the access network device transmits the second message via the downlink beam corresponding to the first random access resource, and the second message is forwarded to the terminal device by the IRS.

In some embodiments, the downlink beam used by the IRS in forwarding the second message and/or a fourth message is determined by the IRS, or is indicated to the IRS by the network device; wherein the second message is MsgB in a two-step random access procedure or Msg2 in a four-step random access procedure, and the fourth message is Msg4 in the four-step random access procedure.

Embodiments of the present disclosure provide a method for random access. The method is performed by an IRS, and includes at least one of S1 to S6.

In S1, the IRS receives and/or forwards first information, wherein the first information is used to indicate a correspondence between at least one downlink beam reflected by the IRS and at least one random access resource.

In some embodiments, the correspondence is determined by a network device. Illustratively, the IRS receives the first information from the network device. Correspondingly, the network device transmits the first information to the IRS.

In some embodiments, upon S1, S2 is further included. In S2, the IRS forwards the first information to a terminal device.

In some embodiments, the correspondence is determined by the IRS.

Illustratively, the IRS forwards the first information to the network device and/or the terminal device. Correspondingly, the terminal device and/or the network device receives the first information from the IRS.

In some embodiments, different beams of the at least one downlink beam correspond to different SSBs.

In some embodiments, the number of the at least one downlink beam is configured by the network device, is configured by the IRS, or is preconfigured.

In S3, the IRS receives a first message from the terminal device over a first random access resource.

In S4, the IRS forwards the first message to the access network device.

In S5, the IRS receives a second message from the access network device.

In S6, the IRS forwards the second message to the terminal device via a downlink beam corresponding to the first random access resource.

In some embodiments, the downlink beam used by the IRS in forwarding the second message and/or a fourth message is determined by the IRS, or is indicated to the IRS by the network device; wherein the second message is MsgB in a two-step random access procedure or Msg2 in a four-step random access procedure, and the fourth message is Msg4 in the four-step random access procedure.

Some embodiments of the present disclosure further provide a method for random access. The method is performed by a network device, and includes at least one of the following S1 to S3.

In S1, the network device receives and/or transmits first information, wherein the first information is used to indicate a correspondence between at least one downlink beam reflected by an IRS and at least one random access resource.

In some embodiments, the correspondence is determined by the network device. Illustratively, the network device transmits the first information to the IRS and/or a terminal device. Correspondingly, the IRS and/or the terminal device receives the first information.

In some embodiments, the correspondence is determined by the IRS. Illustratively, the network device receives the first information from the IRS. In some embodiments, the IRS forwards the first information to the terminal device.

In some embodiments, different beams of the at least one downlink beam correspond to different SSBs.

In some embodiments, the number of the at least one downlink beam is configured by the network device, is configured by the IRS, or is preconfigured.

In S2, the network device receives a first message from the terminal device over a first random access resource;

In some embodiments, the network device is an access network device, and the first message is forwarded to the access network device by the IRS.

In S3, the network device transmits a second message, wherein the second message is forwarded to the terminal device by the IRS via a downlink beam corresponding to the first random access resource.

Correspondingly, the terminal device receives the second message from the access network device, wherein the second message is forwarded to the terminal device by the IRS via the downlink beam corresponding to the first random access resource.

In some embodiments, the downlink beam used by the IRS in forwarding the second message and/or a fourth message is determined by the IRS, or is indicated to the IRS by the network device; wherein the second message is MsgB in a two-step random access procedure or Msg2 in a four-step random access procedure, and the fourth message is Msg4 in the four-step random access procedure.

It should be noted that for the details not described in detail in the random access methods at the terminal device, at the IRS, and at the network device, reference may be made to the method embodiments, which are not descrived herein any further. In the method embodiments, the steps performed by the terminal device may be implemented as the method for random access at the terminal device; the steps performed by the IRS may be implemented as the method for random access at the IRS; or the steps performed by the network device may be implemented as the method for random access at the network device.

Hereinafter are apparatus embodiments of the present disclosure, which may be applicable to performing the method embodiments. For details not disclosed in the apparatus embodiments, reference may be made to the method embodiments of the present disclosure.

FIG. 8 is a block diagram of an apparatus for random access according to some embodiments of the present disclosure. The apparatus has the functions of performing the methods for random access, and all functions may be implemented by hardware or implemented by software run by hardware. The apparatus may be the terminal device described above or be disposed in the terminal device. As illustrated in FIG. 8, the apparatus 800 includes a receiving module 810.

The receiving module 810 is configured to receive first information, wherein the first information is used to indicate a correspondence between at least one downlink beam reflected by an IRS and at least one random access resource.

In some embodiments, the correspondence is determined by a network device.

In some embodiments, the correspondence is indicated by the network device to the IRS and/or the terminal device.

In some embodiments, the correspondence is determined by the IRS.

In some embodiments, the correspondence is indicated by the IRS to the terminal device and/or the network device.

In some embodiments, different beams of the at least one downlink beam correspond to different SSBs.

In some embodiments, the number of the at least one downlink beam is configured by the network device, is configured by the IRS, or is preconfigured.

In some embodiments, the apparatus 800 further includes a transmitting module (not illustrated in FIG. 8). The transmitting module is configured to transmit a first message over a first random access resource, wherein the first message is forwarded to an access network device by the IRS; and the receiving module 810 is further configured to receive a second message from the access network device, wherein the second message is forwarded to the terminal device by the IRS via a downlink beam corresponding to the first random access resource.

In some embodiments, the downlink beam used by the IRS in forwarding the second message and/or a fourth message is determined by the IRS, or is indicated to the IRS by the network device; wherein the second message is MsgB in a two-step random access procedure or Msg2 in a four-step random access procedure, and the fourth message is Msg4 in the four-step random access procedure.

In some embodiments, the network device is the access network device or a core network element.

In the technical solutions according to the embodiments of the present disclosure, in a case where the IRS is introduced into a communication system, with the correspondence established between at least one downlink beam reflected by the IRS and at least one random access resource, the terminal device may determine the random access resource for the random access procedure based on the at least one downlink beam, thereby ensuring the normal execution of the random access procedure and improving the communication stability.

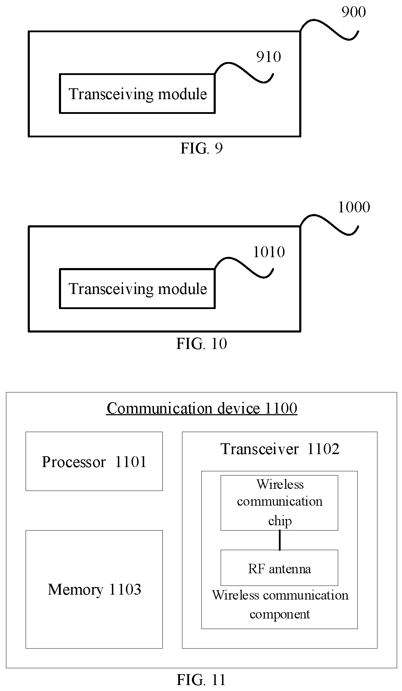

FIG. 9 is a block diagram of an apparatus for random access according to some embodiments of the present disclosure. The apparatus has the functions of performing the methods for random access, and all functions may be implemented by hardware or implemented by software run by hardware. The apparatus may be the IRS described above or be disposed in the IRS. As illustrated in FIG. 9, the apparatus 900 includes a transceiving module 910.

The transceiving module 910 is configured to receive and/or transmit first information, wherein the first information is used to indicate a correspondence between at least one downlink beam reflected by the IRS and at least one random access resource.

In some embodiments, the correspondence is determined by a network device.

In some embodiments, the transceiving module 910 is configured to receive the first information from the network device.

In some embodiments, the transceiving module 910 is further configured to transmit the first information to a terminal device.

In some embodiments, the correspondence is determined by the IRS.

In some embodiments, the transceiving module 910 is configured to transmit the first information to the terminal device and/or the network device.

In some embodiments, different beams of the at least one downlink beam correspond to different SSBs.

In some embodiments, the number of the at least one downlink beam is configured by the network device, is configured by the IRS, or is preconfigured.

In some embodiments, the transceiving module 910 is further configured to: receive a first message from the terminal device over a first random access resource; forward the first message to the access network device; receive a second message from the access network device; and forward the second message to the terminal device via a downlink beam corresponding to the first random access resource.

In some embodiments, the downlink beam used by the IRS in forwarding the second message and/or a fourth message is determined by the IRS, or is indicated to the IRS by the network device; wherein the second message is MsgB in a two-step random access procedure or Msg2 in a four-step random access procedure, and the fourth message is Msg4 in the four-step random access procedure.

In the technical solutions according to the embodiments of the present disclosure, when the IRS is introduced into a communication system, by establishing the correspondence between at least one downlink beam reflected by the IRS and at least one random access resource, the terminal device may determine the random access resource for the random access procedure based on the at least one downlink beam, thereby ensuring the normal execution of the random access procedure and improving the communication stability.

FIG. 10 is a block diagram of an apparatus for random access according to some embodiments of the present disclosure. The apparatus has the functions of performing the methods for random access, and all functions may be implemented by hardware or implemented by software run by hardware. The apparatus may be the network device described above or be disposed in the network device. As illustrated in FIG. 10, the apparatus 1000 includes a transceiving module 1010.

The transceiving module 1010 is configured to receive and/or transmit first information, wherein the first information is used to indicate a correspondence between at least one downlink beam reflected by an IRS and at least one random access resource.

In some embodiments, the correspondence is determined by the network device.

In some embodiments, the transceiving module 1010 is configured to transmit the first information to the IRS and/or a terminal device.

In some embodiments, the correspondence is determined by the IRS.

In some embodiments, the transceiving module 1010 is configured to receive the first information from the IRS.

In some embodiments, different beams of the at least one downlink beam correspond to different SSBs.

In some embodiments, the number of the at least one downlink beam is configured by the network device, is configured by the IRS, or is preconfigured.

In some embodiments, the transceiving module 1010 is configured to receive a first message from the terminal device over a first random access resource; and the transceiving module 1010 is further configured to transmit a second message, wherein the second message is forwarded to the terminal device by the IRS via a downlink beam corresponding to the first random access resource.

In some embodiments, the downlink beam used by the IRS in forwarding the second message and/or a fourth message is determined by the IRS, or is indicated to the IRS by the network device; wherein the second message is MsgB in a two-step random access procedure or Msg2 in a four-step random access procedure, and the fourth message is Msg4 in the four-step random access procedure.

In the technical solutions according to the embodiments of the present disclosure, in a case where the IRS is introduced into a communication system, by establishing the correspondence between at least one downlink beam reflected by the IRS and at least one random access resource, the terminal device may determine the random access resource for the random access procedure based on the at least one downlink beam, thereby ensuring the normal execution of the random access procedure and improving the communication stability.

It should be noted that when the apparatus according to the above embodiments implements its functions, the division of the functional modules is only used as an example for illustration. In practical applications, the functions may be assigned to different functional modules according to actual needs, that is, the apparatus may be designed into different functional modules to complete all or part of the functions described above.

Regarding the apparatus according to the above embodiments, the specific manner in which each module performs operations has been described in detail in the embodiments related to the method, and will not be elaborated here. For details not described in detail in the apparatus embodiments, reference may be made to the above method embodiments, which are not described herein any further.

FIG. 11 is a schematic structural diagram of a communication device according to some embodiments of the present disclosure. The communication device may be the terminal device, the network device, or the IRS.The communication device 1100 includes a processor 1101, a transceiver 1102, and a memory 1103. The transceiver 1102 is configured to implement the function of at least one of the receiving module 810, the transmitting module, the transceiving module 910, or the transceiving module 1010; and the processor 1101 is configured to implement other processing functions or control transmission and/or reception.

The processor 1101 includes one or more processing cores. The processor 1101 runs various functional applications and performs information processing by running one or more software programs and modules.

The transceiver 1102 includes a receiver and a transmitter. For example, the receiver and the transmitter may be implemented as a wireless communication component. The wireless communication component may include a wireless communication chip and a radio frequency (RF) antenna.

The memory 1103 may be connected to the processor 1101 and the transceiver 1102.

The memory 1103 may be configured to store at least one computer program run by a processor. The processor 1101 is configured to load and run the at least one computer program to perform the processes in the above method embodiments.

In some embodiments, when the communication device is a terminal device, the transceiver 1102 is configured to receive first information, wherein the first information is used to indicate a correspondence between at least one downlink beam reflected by an IRS and at least one random access resource.

In some embodiments, when the communication device is an IRS, the transceiver 1102 is configured to receive and/or transmit first information, wherein the first information is used to indicate a correspondence between at least one downlink beam reflected by the IRS and at least one random access resource.

In some embodiments, when the communication device is a network device, the transceiver 1102 is configured to receive and/or transmit first information, wherein the first information is used to indicate a correspondence between at least one downlink beam reflected by an IRS and at least one random access resource.

For details not described in the present embodiment, reference may be made to the above embodiments, which are not described herein any further.

In addition, the memory may be practiced by any type of volatile or non-volatile storage device or a combination thereof. The volatile or non-volatile storage device includes but is not limited to: a magnetic disk or an optical disc, an electrically erasable programmable read-only memory (EEPROM), an erasable programmable read-only memory (EPROM), a static random-access memory (SRAM), a read-only memory (ROM), a magnetic memory, a flash memory, and a programmable ROM (PROM).

Some embodiments of the present disclosure further provide a computer-readable storage medium. The computer-readable storage medium stores one or more computer programs, and the computer programs, when loaded and run by a processor, causes the processor to perform the method for random access at the terminal device, or the method for random access at the IRS, or the method for random access at the network device. In some embodiments, the computer-readable storage medium may include a ROM, a random-access memory (RAM), a solid-state drive (SSD), an optical disk, or the like. The RAM may include a resistance random access memory (ReRAM) and a dynamic random-access memory (DRAM).

Some embodiments of the present disclosure further provide a chip. The chip includes a programmable logic circuit and/or one or more program instructions. The chip, when running, is caused to perform the method for random access at the terminal device, or the method for random access at the IRS, or the method for random access at the network device.

Some embodiments of the present disclosure further provide a computer program product. The computer program product includes one or more computer instructions stored in a computer-readable storage medium. The one or more computer instructions, when read from the computer-readable storage medium and executed by a processor, cause the processor to perform the method for random access at the terminal device, or the method for random access at the IRS, or the method for random access at the network device.

It is to be understood that "indication" mentioned in the embodiments of the present disclosure may be a direct indication, an indirect indication, or an indication that an association relationship is present. For example, "A indicates B" may mean that A directly indicates B, for example, B may be obtained from A; or may mean that A indirectly indicates B, for example, A indicates C via which B may be obtained; or may mean an association relationship is present between A and B.

In the description of the embodiments of the present disclosure, the term "corresponding" indicates a direct or indirect correspondence between two items, or an association relationship between the two items, or a relationship such as indicating and being indicated, configuring and being configured, or the like.

In some embodiments of the present disclosure, the term "predefinition" may be implemented by pre-storing a corresponding code, a corresponding table, or another method that may be used to indicate relevant information in a device (such as a terminal device and a network device), and the specific implementation thereof is not limited in the present disclosure. For example, the term "predefined" may be "defined" in a protocol.

In some embodiments of the present disclosure, the term "protocol" may be a standard protocol in the field of communication, and for example, may include an LTE protocol, an NR protocol, and a related protocol applicable to a future communication system, which is not limited in the present disclosure.

The expression "a plurality of" herein refers to two or more. The term "and/or" herein describes an association relationship between associated objects, indicating three types of relationships. For example, the phrase "A and/or B" means (A), (B), or (A and B). The character "/" herein generally represents an "or" relationship between the associated objects.

The expression "greater than or equal to" herein means greater than or equal to or just greater than, and the expression "less than or equal to" herein means less than or equal to or just less than.

In addition, the serial numbers of the processes described herein only exemplifies one possible execution sequence among the processes. In some embodiments, the processes may also be executed without following the numbered order. For example, two processes with different numbers are executed simultaneously or in an order reverse to the order illustrated in the figures, which is not limited in the embodiments of the present disclosure.

A person skilled in the art shall appreciate that in the foregoing one or more examples, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent replacements, improvements, and the like made within the spirit and principle of the present disclosure shall fall within the protection scope of the present disclosure.

## Claims

1. A method for random access, performed by a terminal device, the method comprising:
receiving first information, wherein the first information is used to indicate a correspondence between at least one downlink beam reflected by an intelligent reflecting surface and at least one random access resource.

2. The method according to claim 1, wherein the correspondence is determined by a network device.

3. The method according to claim 2, wherein the correspondence is indicated by the network device to the intelligent reflecting surface and/or the terminal device.

4. The method according to claim 1, wherein the correspondence is determined by the intelligent reflecting surface.

5. The method according to claim 4, wherein the correspondence is indicated by the intelligent reflecting surface to the terminal device and/or the network device.

6. The method according to any one of claims 1 to 5, wherein different beams of the at least one downlink beam correspond to different synchronization signal and physical broadcast channel (PBCH) blocks (SSBs).

7. The method according to any one of claims 1 to 6, wherein the number of the at least one downlink beam is configured by the network device, is configured by the intelligent reflecting surface, or is preconfigured.

8. The method according to any one of claims 1 to 7, further comprising:
transmitting a first message over a first random access resource, wherein the first message is forwarded to an access network device by the intelligent reflecting surface;
receiving a second message from the access network device, wherein the second message is forwarded to the terminal device by the intelligent reflecting surface via a downlink beam corresponding to the first random access resource.

9. The method according to any one of claims 1 to 8, wherein the downlink beam used by the intelligent reflecting surface in forwarding the second message and/or a fourth message is determined by the intelligent reflecting surface, or is indicated to the intelligent reflecting surface by the network device; wherein the second message is MsgB in a two-step random access procedure or Msg2 in a four-step random access procedure, and the fourth message is Msg4 in the four-step random access procedure.

10. The method according to claims 2, 3, 5, 7, or 9, wherein the network device is an access network device or a core network element.

11. A method for random access, performed by an intelligent reflecting surface, the method comprising:
receiving and/or transmitting first information, wherein the first information is used to indicate a correspondence between at least one downlink beam reflected by the intelligent reflecting surface and at least one random access resource.

12. The method according to claim 11, wherein the correspondence is determined by a network device.

13. The method according to claim 12, wherein receiving and/or transmitting first information comprises:
receiving the first information from the network device.

14. The method according to claim 13, wherein upon receiving the first information from the network device, the method further comprises:
transmitting the first information to a terminal device.

15. The method according to claim 11, wherein the correspondence is determined by the intelligent reflecting surface.

16. The method according to claim 15, wherein receiving and/or transmitting first information comprises:
transmitting the first information to the terminal device and/or the network device.

17. The method according to any one of claims 11 to 16, wherein different beams among the at least one downlink beam correspond to different synchronization signal and physical broadcast channel (PBCH) blocks (SSBs).

18. The method according to any one of claims 11 to 17, wherein the number of the at least one downlink beam is configured by the network device, is configured by the intelligent reflecting surface, or is preconfigured.

19. The method according to any one of claims 11 to 18, further comprising:
receiving a first message from the terminal device over a first random access resource;
forwarding the first message to the access network device;
receiving a second message from the access network device;
forwarding the second message to the terminal device via a downlink beam corresponding to the first random access resource.

20. The method according to any one of claims 11 to 19, wherein the downlink beam used by the intelligent reflecting surface in forwarding the second message and/or a fourth message is determined by the intelligent reflecting surface, or is indicated to the intelligent reflecting surface by the network device; wherein the second message is MsgB in a two-step random access procedure or Msg2 in a four-step random access procedure, and the fourth message is Msg4 in the four-step random access procedure.

21. A method for random access, performed by a network device, the method comprising:
receiving and/or transmitting first information, wherein the first information is used to indicate a correspondence between at least one downlink beam reflected by an intelligent reflecting surface and at least one random access resource.

22. The method according to claim 21, wherein the correspondence is determined by the network device.

23. The method according to claim 22, wherein receiving and/or transmitting first information comprises:
transmitting the first information to the intelligent reflecting surface and/or a terminal device.

24. The method according to claim 21, wherein the correspondence is determined by the intelligent reflecting surface.

25. The method according to claim 24, wherein receiving and/or transmitting first information comprises:
receiving the first information from the intelligent reflecting surface.

26. The method according to any one of claims 21 to 25, wherein different beams among the at least one downlink beam correspond to different synchronization signal and Physical Broadcast Channel (PBCH) blocks (SSBs).

27. The method according to any one of claims 21 to 26, wherein the number of the at least one downlink beam is configured by the network device, is configured by the intelligent reflecting surface, or is preconfigured.

28. The method according to any one of claims 21 to 27, further comprising:
receiving a first message from the terminal device over a first random access resource;
transmitting a second message, wherein the second message is forwarded to the terminal device by the intelligent reflecting surface via a downlink beam corresponding to the first random access resource.

29. The method according to any one of claims 21 to 28, wherein the downlink beam used by the intelligent reflecting surface in forwarding the second message and/or a fourth message is determined by the intelligent reflecting surface, or is indicated to the intelligent reflecting surface by the network device; wherein the second message is MsgB in a two-step random access procedure or Msg2 in a four-step random access procedure, and the fourth message is Msg4 in the four-step random access procedure.

30. An apparatus for random access, arranged in a terminal device, the apparatus comprising:
a receiving module, configured to receive first information, wherein the first information is used to indicate a correspondence between at least one downlink beam reflected by an intelligent reflecting surface and at least one random access resource.

31. An apparatus for random access, arranged in an intelligent reflecting surface, the apparatus comprising:
a transceiving module, configured to receive and/or transmit first information, wherein the first information is used to indicate a correspondence between at least one downlink beam reflected by the intelligent reflecting surface and at least one random access resource.

32. An apparatus for random access, arranged in a network device, the apparatus comprising:
a transceiving module, configured to receive and/or transmit first information, wherein the first information is used to indicate a correspondence between at least one downlink beam reflected by an intelligent reflecting surface and at least one random access resource.

33. A communication device, comprising: a processor and a memory; wherein the memory is configured to store at least one computer program therein, wherein the processor is configured to load and run the at least one computer program, to cause the communication device to perform the method as defined in any one of claims 1 to 10, or the method as defined in any one of claims 11 to 20, or the method as defined in any one of claims 21 to 29.

34. A computer-readable storage medium, storing at least one computer program therein, wherein the at least one computer program, when loaded and run by a processor, causes the processor to perform the method as defined in any one of claims 1 to 10, or the method as defined in any one of claims 11 to 20, or the method as defined in any one of claims 21 to 29.

35. A chip, comprising: at least one programmable logic circuit and/or at least one program instruction, wherein the chip, when running, is caused to perform the method as defined in any one of claims 1 to 10, or the method as defined in any one of claims 11 to 20, or the method as defined in any one of claims 21 to 29.

36. A computer program product, comprising at least one computer instruction stored in a computer-readable storage medium; wherein the at least one computer instruction, when read from the computer-readable storage medium and loaded and run by a processor, causes the processor to perform method as defined in any one of claims 1 to 10, or the method as defined in any one of claims 11 to 20, or the method as defined in any one of claims 21 to 29.
